# EUROPEAN PATENT SPECIFICATION

(11) **EP 3 314 152 B1**
(45) Date of publication and mention of the grant of the patent: **04.05.2022**
(21) Application number: 15890105.8
(22) Date of filing: 23.04.2015
(51) Int. Cl.: F16J 15/06, F16L 23/18, F16L 25/02, F16J 15/10

(54) **SEALING SYSTEM HAVING INTERLOCKING INNER DIAMETER SEAL ELEMENT TO RESIST PRESSURE CHANGES**
DICHTUNGSSYSTEM MIT INEINANDERGREIFENDEN INNENDURCHMESSERDICHTELEMENT ZUR VERMEIDUNG VON DRUCKÄNDERUNGEN
SYSTÈME D'ÉTANCHÉITÉ AYANT UN ÉLÉMENT DE JOINT D'ÉTANCHÉITÉ DE DIAMÈTRE INTERNE À VERROUILLAGE MUTUEL POUR RÉSISTER À DES CHANGEMENTS DE PRESSION

(43) Date of publication of application: 02.05.2018
(73) Proprietor: Garlock Pipeline Technologies, Inc., Wheat Ridge, CO 80033 (US)
(72) Inventor: BANDER, Nicholas, Wheat Ridge, CO 80033 (US); ROBERTSON, Patrick, Wheat Ridge, CO 80033 (US); WITTEKIND, David, Wheat Ridge, CO 80033 (US); TANNER, T., Scott, Wheat Ridge, CO 80033 (US)
(74) Representative: J A Kemp LLP
(86) International application number: PCT/US2015/027381
(87) International publication number: WO 2016/171704

(56) References cited:
- WO-A1-01/48415
- CN-A- 104 121 366
- GB-A- 2 306 790
- US-A- 3 720 420
- US-A- 3 871 668
- US-A- 4 776 600
- US-A1- 2006 220 324
- US-A1- 2008 111 313
- US-A1- 2011 266 755
- US-B1- 6 402 159
- US-B1- 6 402 159
- US-B2- 7 976 074

## Description

### FIELD

The present disclosure relates generally to an isolation gasket which is adapted to be interposed and compressed between joined pieces of pipe in a flow line that is operative for fluid flow therethrough without leakage. The seal device of the present disclosure is specifically adapted to resist pressure changes in a flow line through an inner diameter seal element that is interlocked to a retaining element.

### BACKGROUND

Seal systems using gasket devices are well known and have been used in a variety of applications to prevent fluid from leaking between joined pieces. For example, a seal device is interposed and compressed between flanged end connections of a flow line. In some cases, in-line process control equipment is to be installed at various points in a flow line and may be associated with flanged end connections of a flow line. In-line process control equipment may include such things as valves, pumps, flow meters, temperature controllers, pressure controllers and the like. In addition, ends of pipe sections are provided with flanges so that the sections may be connected, end-to-end, to form the flow line. It is known to provide gasket devices at the interfaces of the joined sections to prevent leakage of the fluid at the joint.

Regardless of the nature of the joint, that is, whether it is between the joined sections of pipe or whether for some other purpose, such as, for example, joints used to connect in-line process control equipment, it is desirable for a gasket device and seal system to be selected based on various factors that are associated with a particular joint and the particular media that is conveyed through the joint. These factors include the corrosive nature of the media flowing through the pipe line as well as the physical characteristics of that flowing media. Such physical characteristics include the pressure, temperature and velocity of the media, as well as anticipated changes in the pressure (including a dramatic change in pressure due to rupture), temperature and velocity of the media. Additionally, in many cases it is also necessary to not only provide a reliable seal for the joint but to also electrically isolate one side of the joint from the other.

US3720420 discloses a gasket comprising a set of rigid cover sections overlying a set of rigid base sections, the sections carrying a resilient sealing element, the cover sections having endwise joints therebetween that are offset from endwise joints between the base sections and each cover section being attached to two base sections that it overlies so as to form a unitary gasket assembly. US 3 871 886, CN 104 121, GB 2 306 790, WO 02/48415, US 6 402 159 and US 7 976 074 disclose various further arrangements of seals and/or gaskets.

### SUMMARY

The technology of the present application recognizes that a sealing system that can contain high pressures and provide an inner diameter seal element that can withstand significant changes in pressure would be a significant improvement in the field of effective flow line sealing. According to the present invention, which is defined by the independent claim, there is provided a seal apparatus and an isolation system.

Embodiments disclosed herein provide sealing systems for high pressure applications. The sealing systems comprise one or more retaining elements having an inner diameter with one or more inner diameter seal elements. The inner diameter seal element(s) interlocks with an inner diameter portion of the retaining element(s) to provide resistance to movement in both axial and radial directions between the retaining element(s) and seal element(s). The retaining element(s) provide resistance to movement in both the outer and inner radial direction. In one aspect of the technology, high pressure sealing is accomplished using a metallic core retaining element to which an electrically isolating material may be bonded on either or both sides. Sealing is achieved through an inner diameter dielectric sealing element, such as a polytetrafluoroethylene (PTFE) inner diameter sealing ring. The inner diameter sealing ring may be a flat or profiled surface, such as, for example, a kammprofile. Flanges of the joint may be bolted together with the seal interposed therebetween. In the event of pressure changes, the inner diameter seal resists being drawn into the flow line and resists axial movement relative to the retaining element through the locking member(s) that secure the inner diameter seal element to the retaining element. In additional aspects, the technology may be provided with other configurations including, one or more backup seals in the retaining element, one or more backup seals in the inner diameter seal, and one or more compression limiters within either the inner diameter seal or the retaining element.

In one aspect, the technology of the present application provides a gasket seal apparatus for use between joined pieces in a flow line that is operative for fluid passage therethrough. The gasket seal comprises (A) a retaining ring having opposing side surfaces and an inner diameter opening formed therein, the retaining ring comprising: (i) a axial lock feature forming a circumferential groove on the inner diameter opening, and (ii) a radial lock feature forming a circumferential rim about the inner diameter opening; and (B) an inner diameter seal element having an inner seal surface, an outer seal surface, and a locking portion, the locking portion comprising: (i) a axial lock protrusion cooperatively engaged with the axial locking feature, and (ii) a hook cooperatively engaged with said radial locking feature, wherein the cooperative engagement of the axial lock protrusion and the axial lock feature and the hook with the radial lock feature substantially prevents relative axial and
radial movement between the retaining ring and the inner diameter seal element. The axial and radial locking features and members are interlocked so as to substantially prevent axial and radial movement between the retaining ring and the inner diameter seal element. The retaining ring may have a metal core and a layer of dielectric material disposed on at least one of said opposing side surfaces, or may be formed from a polyimide material, to provide just two examples. The retaining ring may further include a groove formed on each of the opposing side surfaces and a secondary seal element disposed in each of the grooves.

In one embodiment, the radial locking feature comprises a radially extended flanged surface and projection forming recess in the retaining ring and the radial locking member on the inner diameter sealing element comprises a complimentary flanged surface and projection forming a recess to allow interlocking of the retaining ring and locking member. The axial locking feature, in an embodiment, comprises a recess formed in the retaining ring and the axial locking member comprises a complimentary wedged or tapered shaped projection that extends into the recess. The inner seal surface may have a chevron-shaped pressure activated surface, for example.

In another aspect, the present disclosure provides a gasket seal apparatus for use between joined pieces in a flow line that is operative for fluid passage therethrough. The gasket seal comprises (A) a retaining ring comprising a core material having a core inner surface, a first side surface, and a second side surface opposing the first side surface, a first layer of surface material coating the first side surface and a second layer of surface material coating the second side surface, wherein: (i) the core material comprising a recess in the first side surface wherein said recess forms an inner diameter circumferential ring, (ii) the first layer of surface material comprising a circumferential groove in a first material inner surface, wherein the first material inner surface is placed radially outward of the core inner surface, and (iii) the second layer of surface material comprising a second material inner surface substantially aligned with the core inner surface; and (B) a seal element having an inner seal surface, an outer seal surface, a hook, and an axial lock protrusion, wherein: (i) the hook comprises a leg and a lip that form a recess with the outer seal surface such that the recess cooperatively engages the rim to prevent relative radial movement between the retaining ring and the seal element; and (ii) the axial lock protrusion extends from the leg of the hook and cooperatively engages the circumferential groove to prevent relative axial movement between the retaining ring and the seal element.

In still a further aspect, the present disclosure provides an isolation system that provides an interface between joined flange pieces, each having an inner and an outer face, in a flow line that is operative for fluid passage therethrough, comprising: a gasket seal comprising (A) a retaining ring having opposing side surfaces and an inner diameter opening formed therein, the retaining ring having (i) an axial lock feature comprising a rectangular groove formed on said inner diameter opening, and (ii) a radial lock feature comprising a rectangular recess and rim formed on said inner diameter opening, and (B) a seal element having an inner seal surface and an outer seal surface, the outer seal surface comprising (i) an axial lock protrusion engaged with the rectangular groove, and (ii) a radial lock member engaged with the rectangular recess and the rim, wherein said axial and radial lock features and members are cooperatively engaged so as to substantially prevent relative axial and radial movement between said retaining ring and the seal element; at least one insulating sleeve receivable in an aligned bore formed in each joined flange piece, the sleeve having a length that is substantially equal to a distance between outer faces of the joined flange pieces with the gasket seal interposed therebetween; at least one elongate metal fastener having opposing ends, the fastener being receivable in the insulating sleeve for connecting joined flange pieces to one another with the gasket seal interposed therebetween; and at least one insulating washer receivable on the at least one elongate metal fastener abutting at least one of the flange piece outer faces. The metal fastener may further comprise a metal shaft threaded to receive a nut on at least one of the opposing ends. The retaining ring may further comprise a groove formed on each of the opposing side surfaces and a secondary seal element disposed in each of the grooves. The radial locking feature, in an embodiment, comprises a wedge-shaped recess formed in the retaining ring, and the radial locking member comprises a complimentary wedge-shaped projection that extends into the wedge-shaped recess. The axial locking feature, in an embodiment, comprises a semi-circular shaped recess formed in the retaining ring, and the axial locking member comprises a complimentary semi-circular shaped projection that extends into the semi-circular shaped recess.

These and other advantages and novel features of the disclosure will be set forth in part in the description which follows, which discloses various embodiments, including the currently preferred embodiment.

### BRIEF DESCRIPTION OF THE DRAWINGS

FIG. 1 is a side view, partially in cross-section, showing an isolation gasket and sealing system according to a first exemplary embodiment of the present disclosure;
FIG. 2 is an enlarged side view in partial cross-section showing a representative nut and bolt set used with various insulating components for electrically isolating a flange joint for various exemplary embodiments;
FIG. 3 side cross-section view of one-half of a flange joint showing a gasket according to an exemplary embodiment;
FIG. 4 is a cross-sectional view of the inner-diameter sealing member of a gasket for an exemplary embodiment;
FIG. 5 is a cross-sectional view of a retaining member of an exemplary embodiment;
FIG. 6 is a cross-sectional view of a retaining member of another exemplary embodiment;
FIGS. 7A - 7C are cross-sectional views of pressure activated seal members according to several exemplary embodiments;
FIGS. 8A - 8D are cross-sectional views of seal members with different vertical locking elements according to several exemplary embodiments;
FIGS. 9A - 9C are cross-sectional views of seal members with different radial locking elements according to several exemplary embodiments;
FIG. 10 is a cross-sectional view of a retaining member of an exemplary embodiment; and
FIG. 11 is a cross-sectional view of the sealing member of a gasket for an exemplary embodiment.

### DETAILED DESCRIPTION

For a more complete understanding of the technology of the present application, reference is now made to the following detailed description of several exemplary embodiments as illustrated in the drawing figures, in which like numbers represent the same or similar elements. Various embodiments are described herein, with specific examples provided in many instances to serve to illustrate and discuss various concepts included in the present disclosure. The specific embodiments and examples provided are not necessarily to be construed as preferred or advantageous over other embodiments and/or examples. Furthermore, concepts described herein may be used with numerous different variations of sealing gaskets and sealing systems. For example, an inner diameter seal may be used with a retaining member and secondary sealing elements and/or compression limiter such as described in U.S. Patent No. 7,976,074, issued July 12, 2011, entitled "ISOLATION GASKET, SYSTEM, AND METHOD OF MANUFACTURE," the entire disclosure of which is incorporated herein by reference as if set out in full.

As mentioned above, the technology of the present application provides, among other things, a solution to problems that may occur with currently known inner-diameter seals in that the seal can collapse into the bore of the piping system during variations in piping pressure, including rapid decompression of the piping pressure, when a vacuum is pulled into the piping systems, and/or when suction is caused by the flow of the media past the seal. Having the seal collapse into the bore can cause significant problems as, in certain situations, when the system is repressurized the media will escape past the collapsed seal, come into contact with the retainer, and possibly escape to the environment or outside of the piping system. Further, the collapsed seal may be transported down the piping system where it may cause other problems such as obstructions with other piping components, damage or the like to moving components such as pumps or the like, contamination of processing systems, and/or jamming of pigging operations, to name a few.

The technology of the present application is generally directed to an isolation gasket adapted to be used in a joint that inhibits, prevents, or substantially reduces the likelihood of a seal collapse into the bore of the joint, which generically is in a piping system. Such joints may be a flange connection between two sections of pipeline, which are connected in end-to-end relation. In other aspects, the joint may be a connection used to connect monitoring equipment to the flow line, which may be flanged or other types of connections. Other joints may not include flanged surfaces as the above referenced conventional joints. Accordingly, the technology disclosed in the present application is described in reference to a conventional flanged connection such as, for example, the flanged connection used with end-to-end connection of a pair of pipeline sections, but it should be clearly understood that the present invention is not limited to such flanged connections.

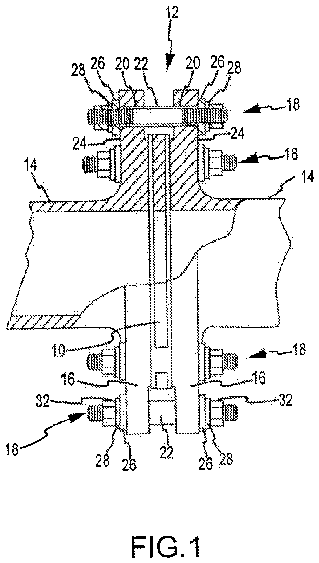

With reference now to FIG. 1, a sealing gasket 10 is located in a flange connection 12 between two pipe sections 14 in a flow line application. Each of pipe sections 14 includes flanges 16 which may be placed in confronting relationship with gasket 10 therebetween. Flanges 16 are provided with bores 20 which align with one another so that flanges 16 may be connected by nut 32 and bolt 18 sets, as is known in the art.

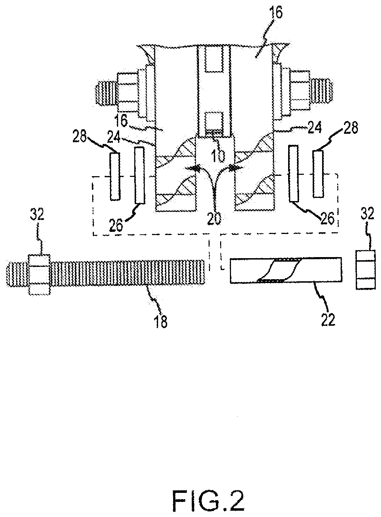

With continued reference to FIG. 1, and with reference to FIG. 2, some embodiments provide for electrical isolation between flanges 16, which may be accomplished by a plurality of different components associated with each aligned pair of bores 20. In this embodiment, a pair of aligned bores 20 is provided with a non-conductive sleeve 22 constructed, for example, of a glass reinforced polymer although other materials, such as epoxy, phenolic and nomex materials may be suitably employed. Sleeve 22 is dimensioned to have a length that is about the same as the distance between outer surfaces 24 of flanges 16 and the thickness of gasket 10 interposed therebetween. Once sleeve 22 has been inserted into a pair of aligned bores 20, insulating washers 26 are placed on either side of bores 20 on outer surfaces 24 of flanges 16. In this embodiment, optional metal washers 28 are then positioned against washer 26 and bolt 30 is passed through the washers and sleeve 22 after which it is secured by nuts 32. In some cases, the insulating washers 26 may have metallic cores for strength and the like such that the optional metal washers 28 are not necessary. This assembly is undertaken for each of the aligned bores 20 after which nuts 32 may be tightened to compress gasket 10 at a desired pressure. Rather than nuts 32 on opposing sides of the nut 32 and bolt 18 set, the bolt 18 may be provided with a head in place of one of the nuts 32.

To facilitate electrical isolation between the pipe sections 14, the gasket 10 may include an outer layer of a dielectric material. Thus, various embodiments described herein contemplate a gasket 10 having a dielectric coating on one or both sides, insulating washers 26, and non-conductive sleeves 22, to provide electrical isolation of separate pipe sections 14. The dielectric coating is only required to be on conductive portions of the gasket 10. Insulating washers 26, as illustrated in FIGS. 1-2, are positioned against outer surfaces 24 of flanges 16 and, in combination with sleeve 22, provide electrical isolation between the nut 32 and bolt 18 sets and the flanges 16. The insulating washers 26 may be metal core washers that are coated with a dielectric material. Similarly, the dielectric outer layer on the gasket 10 provides electrical isolation between the confronting flanges surfaces of flanges 16.

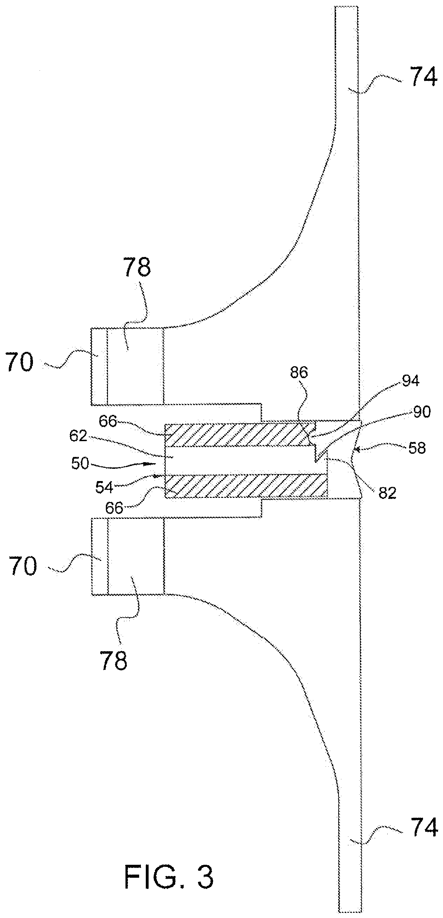

Figure 3 illustrates a cross-section of a portion of a flange connection having a gasket 50 consistent with the technology of the present application. The gasket 50 in this example includes a retaining ring 54 and an inner diameter seal element 58. The inner diameter seal element 58 is sized to fit within the inner diameter of the retaining ring 54. The retaining ring 54, in this embodiment, has a metal core 62 and a coating of material 66 on each side of the metal core 62. In other embodiments, the gasket 50 may have a non-metallic core for strength. When the gasket 50 has a non-metallic core, the coating of material 66 may not be necessary for electrical isolation. In one exemplary embodiment, the coating of material 66 is a dielectric material. The coating of material 66 may comprise a sealing material, such as polytrafluoroethylene (PTFE) or other fluorinated polymer to allow the coating material to act as a secondary seal should the seal element 58 fail. In another aspect, the coating material 66 may be a copolymer PTFE, such as, a composite of PFTE and polyfluoroethylene (PFE). When the coating of material 66 is a dielectric material, the retaining ring 54 provides electrical isolation between flanges 70. The flanges 70 connect pipe sections 74, and include axial bores 78 that may receive bolts and nuts assemblies, such as the aforementioned bolts 18 and nuts 32, or other means to couple the joint components together under a compressive loading. To facilitate electrical isolation, isolation sleeves 22 may be provided along with isolation washers 26 to secure the flanges 70 together in a manner similar as described above with respect to Figs. 1 and 2. Alternatively, the bolts 18 and nuts 32 may be made from an electrically inert material. As can be appreciated now, on reading the disclosure and reviewing the figures, the seal element 58 comprises a dielectric or non-conducting material, such as, for example, the aforementioned PTFE or other fluorinated polymer to name but two potential compositions for the seal element 58.

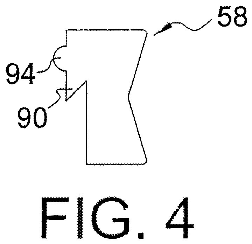

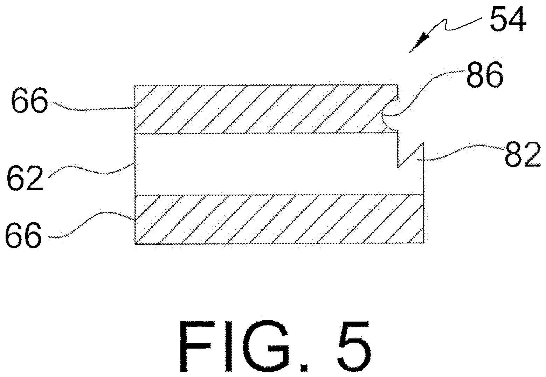

In the embodiment of Fig. 3 the inner diameter seal element 58 and the retaining ring 54 include one or more locking mechanisms 55 that help secure the inner diameter seal element 58 to the retaining ring 54. Generally, the locking mechanism 55 includes a first portion on the retaining ring 54 and a second portion on the seal element 58 that couple to provide a lock between portions. The locking mechanisms 55 described in the present application may be interchangeable between the seal element 58 and the retaining ring 54 although the features may only be described on one or the other. Figure 4 illustrates a cross section of the inner diameter seal element 58 of this embodiment, and Fig. 5 illustrates a cross section of the retaining ring 54 of this embodiment. In the exemplary embodiment shown in Figs. 4 and 5, the retaining ring 54 includes a radial locking element 82 and an axial locking element 86. As used herein, the radial direction is along the radius of a cross section of the joint and the axial direction is along the media flow direction associated with the joint. The inner diameter seal element 58 includes a complimentary radial locking feature 90, and axial locking feature 94. In this manner, the radial locking element 82, and complimentary radial locking feature 90 interlock to help retain the inner diameter seal element 58 to the retaining ring 54 and prevent relative radial movement between the two. In prior designs without radial locking feature, pressure changes within the flow line could potentially result in an inner diameter seal delaminating from the associated retaining member and being drawn into the flow line, resulting in loss of seal at the flange joint, and possibly other undesirable consequences. The axial locking element 86, and complimentary axial locking feature 94 also interlock to help retain the inner diameter seal element 58 to the retaining ring 54 and prevent axial movement between the two. In this embodiment the radial locking element 82 and complimentary radial locking feature 90 are interlocked through an inclined, or wedge-shaped, surface, such that in order to disengage the radial locking element 82 and radial locking feature 90 the seal element 58 would need to be moved in an axial direction relative to the retaining ring 54. The axial locking element 86 and the axial locking feature 94 work to prevent such movement, thereby helping to keep the inner diameter seal element 58 engaged to the retaining ring 54, which also reduces the tendency of delamination between the inner diameter seal element 58 and the retaining ring 54. In such a manner, the complimentary radial and axial locking mechanisms between the inner diameter seal element 58 and the retaining ring 54 help to prevent the intrusion of the seal into the bore during pressure changes, such as negative pressure, rapid decompression or suction from the media that is flowing through the pipe sections 74.

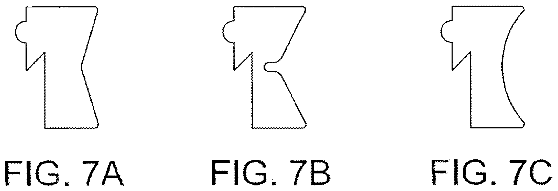

The inner diameter seal element 58 may be formed from any of a number of sealing materials. In an exemplary embodiment, the seal element 58 is constructed of a chemically inert material, such as, PTFE that is held in place by the retaining ring 54. The inner diameter seal element 58, in an embodiment, is machined from a billet of PTFE material, although other types of material may be used, such as rubber or other types of elastomeric material. Also, instead of machining, the PTFE may be molded, extruded, or formed using other methods of formation. In the embodiment of Figs. 3 and 4, the inner face of inner diameter seal element 58 seal is made in a chevron style configuration that is pressure activated and effects sealing of the piping media between the flanges 70. In other words, the inner diameter seal element has an inner radial surface that forms a V or concave shape such that the pressure of the media being sealed provides a sealing force tending to straighten the inner radial surface and causing a sealing force to be applied. Of course, the inner diameter seal element 58 may have one of any number of different configurations that provide sealing of the piping media other than the V or concave shape, and a few examples of such V or concave configurations are illustrated in Figs. 7A through 7C. It will be readily recognized by one of skill in the art that the inner diameter sealing element 58 may have various other configurations that may be selected based on a particular application in which the seal is to be used.

The retaining ring 54 may be constructed of many various materials such as polyimide, glass reinforced epoxy, carbon steel, stainless steel, or a "sandwich" of steel with laminate material bonded on either side such as illustrated in Figs. 3 and 5. As can be appreciated, the retaining ring 54 is shown having flat opposed surfaces. In some aspects, the retaining ring 54 may be used as a secondary seal in which case the profile may be a kammprofile comprising a series of ridges and grooves or a convex surface opposed to the relatively flat flanged surface shown in Fig. 3.

The retaining ring 54 may be machined, molded, or otherwise shaped with a corresponding shape as the outer surface of the inner diameter seal element 58 to accept the interlocking features of the inner diameter seal element 58. The retaining ring 54 may have a sufficient outer diameter to sit on the bolts of the flanges 70. Thus, to align the retaining ring 54, and hence the inner diameter sealing element, the retaining ring 54 is received on a bolt 18 (with or without an isolation sleeve 22). The retaining ring 54 acts, in this case, as a gasket centralizer to ensure the gasket 50 is properly aligned to the flange bore. In one exemplary embodiment, the retaining ring 54 is aligned to one of the flange 70 faces and the inner diameter seal element 58 is then assembled onto the retaining ring 54 to create the gasket 50 prior to securing the flanges 70 together with bolts through the axial bores 78 to create a seating stress acting on the lateral faces of the inner diameter seal element 58, thereby preventing media from escaping the assembly. If electrical isolation is required, then isolation sleeves and washers will be included in the package, similarly as described above with respect to Figs. 1 and 2.

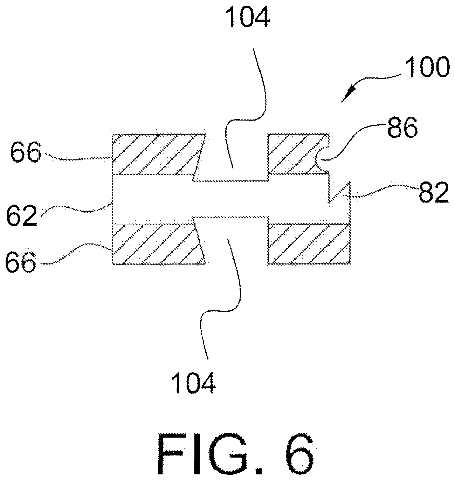

In certain aspects of the technology disclosed herein, the retaining ring 54 may include one or more grooves that contain secondary seal elements and/or compression limiters. A retaining ring 100 of an exemplary embodiment is illustrated in Fig. 6. In this embodiment, the retaining ring 100, similarly as retaining ring 54, has a metal core 62 and a coating of material 66 on each side of the metal core 62 to provide electrical isolation between flanges in a flow line. The retaining ring 100 includes a groove 104 located on at least one side, and in some aspects on both sides as shown in figure 6, of the retaining ring 100. Notice the grooves 104 in the exemplary embodiment are shown as vertically aligned in the radial direction. In certain aspects, the grooves 104 may be offset in the radial direction. A secondary sealing element, such as an o-ring, an E-seal, a spring-energized PTFE lip seal, or the like may be placed in the groove or grooves 104 to provide a secondary, or fail safe, seal to prevent leakage in the event of the failure of the inner diameter seal element 58. In some embodiments, the secondary seal element is a metal seal, and a compression limiter is placed in the groove 104, similarly as described in above-noted U.S. Patent No. 7,976,074. The axially extending sides 105 of grooves 104 may be beveled at an angle between about 75 to 90 degrees, such as, for example, the radially outward side 105 as shown in figure 6. Such a beveled surface provides enhanced retention of a lip seal that may be disposed in one or both of the grooves 104 such that when media applies pressure to the lip seal, the seal is pressured against the inside surface of the beveled groove 104 and thus forced into the groove 104. As will be understood, the dimensions of the embodiment of Fig. 6 are exemplary, and other suitable dimensions may be used in various different applications as will be readily apparent to one of skill in the art. In non-failure operation, the gasket 50, including either retaining ring 54 or 100, is installed in a joint, with the inner diameter sealing element 58 containing the media within the joint. In the event of a failure of the primary seal of sealing element 58, the secondary seal located in groove 104 may facilitate containment of the media within the joint.

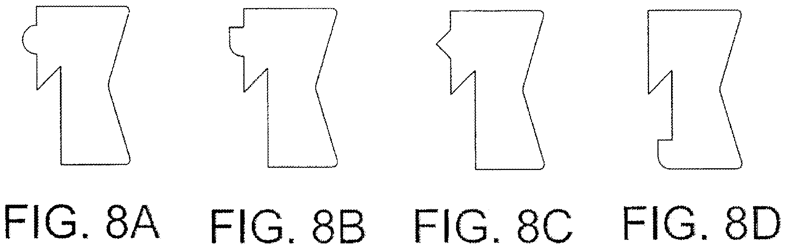

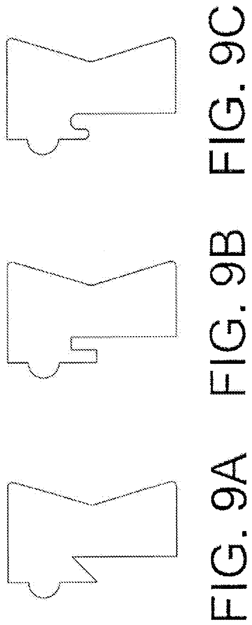

As discussed above, embodiments of the present disclosure provide an inner diameter seal and retaining ring that are interlocked so as to prevent relative movement between the two. It will be readily recognized by one of skill in the art that the locking mechanisms between the seal and retaining ring may take on various different configurations. For example, Figs. 8A through 8D illustrate various different configurations that may be used to prevent axial movement between an inner diameter seal element and a retaining ring. Figs. 9A through 9C illustrate various different configurations that may be used to prevent radial movement between an inner diameter seal element and a retaining ring. It will be understood that any combination of these illustrated features, as well as other configurations, may be used to achieve enhanced physical locking of retaining rings and inner diameter seal elements. In various embodiments, gasket seals such as the types described include an adhesive between the retaining ring and seal element to secure the two together.

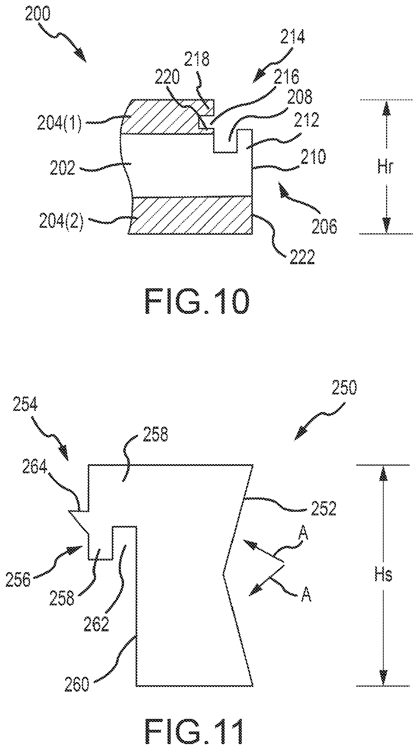

The retaining ring 54 with a curved or tapered surface such as axial locking element 86, which has a concave shape, and radial locking element 82, which has a tapered or angled shape, along with the axial locking feature 94, which is convex to mate with axial locking element 86, and radially locking feature 90, which is a wedge to mate with radial locking element 82, are provided in part to inhibit the inner diameter sealing element from buckling inwardly during seal expansion as a result of decompression or thermal changes. The interaction of the axial and radial locking elements and features, as shown in FIGs 4 and 5, provide a less than ideal reaction vector to resist the motion, which may result in delamination or the like of the gasket. As shown, the angled reaction vector would be at approximately 45 degrees whereas the groove and bead reaction vector would be at a tangent somewhere off the perpendicular. With reference now to FIGs. 10 and 11, a retaining ring 200 (FIG. 10) and an inner diameter seal element 250 (FIG. 11) are provided. The vertical and horizontal arrangements of the locking elements and features, as will be explained below, provide improved resistance to relative movement as the reaction vectors are perpendicular to the direction of movement.

With specific reference to FIG. 10, the retaining ring 200 is shown in more detail. The retaining ring 200 has a height Hᵣ, which will be explained further below. The retaining ring 200 comprises a core material 202, such as a metal or elastic material, and surface materials 204(1), 204(2) coated on opposing sides of the core material 202, although in certain aspects neither side or only one side of the core material 202 is coated. The coating material may be any material mentioned heretofore.

The retaining ring 200 provides a radial locking element 206. The radial locking element 206 comprises a rectangular recess 208 formed in the metal core 202. The recess 208 is formed in the metal core 202 a radial distance outward from the core inner surface 210 forming an inner rim 212 around the inner circumference of the metal core 202.

As shown in FIG. 10, the retaining ring 200 also comprises an axial locking element 214. The axial locking element 214 is a rectangular groove 216 formed in the surface material 204 adjacent the radial locking element 206. The rectangular groove 216, in this exemplary embodiment, is formed about the circumference of a first material inner surface 218 an axial distance from the core material to form a leg 220 that rests on the core material 202. The first material inner surface 218 is formed in surface material 204(1). A second material inner surface 222 is formed in the surface material 204(2) on the opposite side of the core material 202. The first material inner surface 218 is offset radially outward from the second material inner surface 222. The second material inner surface 222 is aligned with the core inner surface 210. The first material inner surface 218 is offset radially outward from the second material inner surface 222 by the distance of the inner rim 212 plus the distance of the recess 208 formed in the metal core 202.

With specific reference now to FIG. 11, the inner diameter seal element 250 is shown in more detail. The inner diameter seal element 250 has a height Hₛ that is greater than Hᵣ. Providing that the inner diameter seal element 250 has a height Hₛ greater than the height Hᵣ of the retaining ring 200 provides a number of benefits. One benefit relates to ensuring compression of the inner diameter seal element 250 by the confronting flanges surfaces that facilitates a positive seal being formed. Another benefit includes providing for a controlled compression expansion. In other words, when compressed axially, the inner diameter seal element 250 attempts to expand radially. The retaining ring 200 inhibits outward radial expansion such that the inner diameter seal element 250 tends to radially expand inwardly. The radially inwardly expansion decreases the volume void ratio such that the seal bore is a closer size alignment with the joint bore, which improves corrosion resistance to name one benefit. The inner diameter seal element 250 has an inner surface 252. The inner surface 252 is chevron shaped as discussed above such that media pressure on the inner surface 252 applies force as shown by arrows A tending to seat the inner diameter seal element 250 against the flanges (not shown in figures 10 and 11). The chevron or generally concave shape(s) and the like may be considered a surface to be inwardly converging to a point internal to the surface, which in this case is the center point.

The inner diameter seal element 250 has a locking portion 254 that comprises parts corresponding to the radial locking element 206 and the axial locking element 214 of the retaining element 202. The locking portion 254 comprises a hook 256 that hooks about the rim 212 described above. The hook 256 may be considered the radial lock for this aspect of the technology. The hook 256 of the locking portion 254 comprises a leg 258 and a lip 260 that together form a recess 262. The recess 262 is sized to fit the inner rim 212. The leg 258 is sized to fit within the rectangular recess 208. The lip 260 extends along the core inner surface 210 and the second material inner surface 222. In one aspect, the inward radial movement is resisted by a surface to surface contact.

The locking portion 254 also comprises an axial lock protrusion 264. The axial locking protrusion 264 is sized to fit within the rectangular groove 216 and is generally protruding from the leg 258 rather than the lip 260. The axial locking protrusion 264 forms a circumferential shelf surface 264ₛ that abuts at least one wall of the rectangular groove 216. As shown, the axial locking protrusion 264 is formed as a wedge having a triangular cross section. The wedge shape facilitates the axial locking protrusion 264 engaging with the rectangular groove 216. The circumferential shelf surface 264ₛ is generally downstream facing to provide a surface to surface resistance to axial movement. The wedge shape facilitates insertion of the axial locking protrusion 264, but the axial locking protrusion 264 could have a shape sized to cooperatively fit into the rectangular groove 216, *e.g.,* be a block shape for example.

As will be appreciated by those skilled in the art, industries such as the oil and gas industry, utilize many, many miles of connected metal pipelines that are subjected, for example, to a natural flow of current through the pipeline and across the metal-to-metal flange connections in the pipeline which causes the flange connections to corrode and build up corrosion similar to battery terminals. The isolation gasket for embodiments of the invention interrupts that current flow through a pipeline and prevents the flanges from corroding and building up corrosion in the way in which they would with a metal-to-metal seal.

A method of making the gasket material for embodiments of the invention involves bonding the dielectric lining material to both sides of the metal substrate in large sheets to assure uniformity of the lamination. According to such a method, a water jet is thereafter utilized to cut appropriately dimensioned I.D and O.D. circles for gaskets out of the large sheets, and the locking elements are formed on the inner diameter circle of the cut-out circular gasket material, for example, with the circular gasket material mounted on a lathe. The resulting isolation gasket for embodiments of the invention has the stability and/or rigidity of a metal gasket with a stainless steel core having excellent corrosion resistance properties, while the glass reinforced epoxy laminated to the opposing surfaces of the gasket provides excellent insulating properties, and the locking elements provide that an inner diameter seal may be interlocked thereto. Grooves may be cut into the circular gasket material using a lathe, as well, in embodiments that use grooves for secondary sealing elements.

The previous description of the disclosed embodiments is provided to enable a person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

## Claims

1. A seal apparatus (10, 50) for use between joined pieces (12, 70) in a flow line that is operative to contain fluid therein, comprising:
(A) a retaining ring (54, 100, 200) comprising a metal core (62, 202) having opposing side surfaces, wherein each of the opposing side surfaces has a dielectric material (66, 204(1), 204(2)) disposed thereon and an inner diameter opening formed therein, the retaining ring comprising:
(i) an axial lock feature (55, 86, 214) forming a circumferential groove (216) in the dielectric material on the inner diameter opening, and
(ii) a radial lock feature (55, 82, 214) forming a circumferential rim (212) in the core about the inner diameter opening; and
(B) an inner diameter seal element (58, 250) having an inner seal surface (252), an outer seal surface, and a locking portion, the locking portion comprising:
(i) an axial lock protrusion (55, 94, 264) interlocked with the axial lock feature, and
(ii) a hook (55, 90, 206, 256) interlocked with said radial lock feature,
wherein the interlocking of the axial lock protrusion with the axial lock feature and the hook with the radial lock feature substantially prevents relative axial and radial movement between the retaining ring and the inner diameter seal element.

2. The seal apparatus as claimed in claim 1, wherein the inner diameter seal element has a first height (Hₛ) and the retaining ring has a second height (Hᵣ) less than the first height to allow compression of the inner diameter seal.

3. The seal apparatus as claimed in claim 1, wherein said retaining ring further comprises a groove (104) formed on each of said opposing side surfaces and a second seal element disposed in each of said grooves.

4. The seal apparatus as claimed in claim 1 , wherein the circumferential groove of the axial lock feature is a rectangular groove formed in the layer of dielectric material on only one side of the metal core and wherein the axial lock protrusion comprises a wedge-shaped projection that extends into said rectangular groove.

5. The seal apparatus as claimed in claim 1, wherein the hook comprises a leg (258) and a lip (260) such that a recess (262) is formed therebetween, and the recess is sized to cooperatively engage the circumferential rim.

6. The seal apparatus as claimed in claim 1, wherein the inner seal surface comprises an inwardly converging surface that is pressure activated.

7. An isolation system that provides an interface between joined flange pieces (12, 70), each having an inner and an outer face, comprising:
a seal apparatus according to any one of the preceding claims;
at last one insulating sleeve (22) receivable in an aligned bore (20) formed in each joined flange piece, said sleeve having a length that is substantially equal to a distance between outer faces of the joined flange pieces with said seal apparatus interposed therebetween;
at least one elongate metal fastener (18, 32) having opposing ends, said fastener being receivable in said insulating sleeve for connecting joined flange pieces to one another with said seal apparatus interposed therebetween; and
at least one insulating washer (26) receivable on said at least one elongate metal fastener abutting at least one of the flange piece outer faces.

8. The isolation system of claim 7, wherein said metal fastener further comprises at least a nut (32) and a metal shaft (18) threaded to receive the nut on at least one of said opposing ends.

9. The isolation system of claim 7, wherein said axial lock feature comprises a semi-circular shaped recess formed in said retaining ring, and said axial lock protrusion comprises a complimentary semi-circular shaped projection that extends into said semicircular shaped recess.

10. The isolation system of claim 7, wherein said inner seal surface comprises a chevron-shaped pressure activated surface.

## Patentansprüche

1. Dichtungsvorrichtung (10, 50) zur Verwendung zwischen verbundenen Teilen (12, 70) in einer Strömungsleitung, die dazu dient, ein Fluid darin zu enthalten, wobei die Dichtungsvorrichtung Folgendes umfasst:
(A) einen Haltering (54, 100, 200), der einen Metallkern (62, 202) mit gegenüberliegenden Seitenflächen aufweist, wobei jede der gegenüberliegenden Seitenflächen ein darauf angeordnetes dielektrisches Material (66, 204(1), 204(2)) und eine darin gebildete Innendurchmesseröffnung aufweist, wobei der Haltering Folgendes umfasst:
(i) ein axiales Verriegelungsmerkmal (55, 86, 214), das eine Umfangsnut (216) in dem dielektrischen Material an der Innendurchmesseröffnung bildet, und
(ii) ein radiales Verriegelungsmerkmal (55, 82, 214), das einen umlaufenden Rand (212) in dem Kern um die Innendurchmesseröffnung herum bildet; und
(B) ein Innendurchmesser-Dichtungselement (58, 250) mit einer inneren Dichtungsfläche (252), einer äußeren Dichtungsfläche und einem Verriegelungsabschnitt, wobei der Verriegelungsabschnitt Folgendes umfasst:
(i) einen axialen Verriegelungsüberstand (55, 94, 264), der mit dem axialen Verriegelungsmerkmal verriegelt ist, und
(ii) einen Haken (55, 90, 206, 256), der mit dem radialen Verriegelungsmerkmal verriegelt ist,
wobei die Verriegelung des axialen Verriegelungsüberstands mit dem axialen Verriegelungsmerkmal und des Hakens mit dem radialen Verriegelungsmerkmal im Wesentlichen eine relative axiale und radiale Bewegung zwischen dem Haltering und dem Innendurchmesser-Dichtungselement verhindert.

2. Dichtungsvorrichtung nach Anspruch 1, wobei das Innendurchmesser-Dichtungselement eine erste Höhe (Hₛ) und der Haltering eine zweite Höhe (Hᵣ), die geringer ist als die erste Höhe, aufweist, um eine Kompression der Dichtung mit innerem Durchmesser zu ermöglichen.

3. Dichtungsvorrichtung nach Anspruch 1, wobei der Haltering ferner eine Nut (104), die an jeder der gegenüberliegenden Seitenflächen gebildet ist, und ein zweites Dichtungselement, das in jeder der Nuten angeordnet ist, aufweist.

4. Dichtungsvorrichtung nach Anspruch 1, wobei die Umfangsnut des axialen Verriegelungsmerkmals eine rechteckige Nut ist, die in der Schicht aus dielektrischem Material auf nur einer Seite des Metallkerns gebildet ist, und wobei der axiale Verriegelungsüberstand einen keilförmigen Vorsprung aufweist, der sich in die rechteckige Nut erstreckt.

5. Dichtungsvorrichtung nach Anspruch 1, wobei der Haken einen Schenkel (258) und eine Lippe (260) aufweist, so dass dazwischen eine Ausnehmung (262) gebildet wird, und die Ausnehmung so bemessen ist, dass sie in den umlaufenden Rand zusammenwirkend eingreift.

6. Dichtungsvorrichtung nach Anspruch 1, wobei die innere Dichtungsfläche eine nach innen konvergierende Fläche umfasst, die durch Druck aktiviert wird.

7. Isoliersystem, das eine Schnittstelle zwischen verbundenen Flanschstücken (12, 70) bereitstellt, wobei jedes eine innere und eine äußere Fläche aufweist, wobei das Isoliersystem Folgendes umfasst:
eine Dichtungsvorrichtung nach einem der vorhergehenden Ansprüche;
mindestens eine Isolierhülse (22), die in einer fluchtenden Bohrung (20) aufgenommen werden kann, die in jedem verbundenen Flanschstück gebildet ist, wobei die Hülse eine Länge aufweist, die im Wesentlichen gleich dem Abstand zwischen den Außenflächen der verbundenen Flanschstücke ist, wobei die Dichtungsvorrichtung dazwischen angeordnet ist;
mindestens ein längliches Metallbefestigungselement (18, 32) mit gegenüberliegenden Enden, wobei das Befestigungselement in der Isolierhülse aufgenommen werden kann, um verbundene Flanschstücke miteinander zu verbinden, wobei die Dichtungsvorrichtung dazwischen angeordnet ist; und
mindestens eine isolierende Unterlegscheibe (26), die auf dem mindestens einen länglichen Metallbefestigungselement aufgenommen werden kann und an mindestens einer der Außenflächen des Flanschstücks anliegt.

8. Isoliersystem nach Anspruch 7, wobei das Metallbefestigungselement ferner mindestens eine Mutter (32) und einen Metallschaft (18) umfasst, der mit einem Gewinde versehen ist, um die Mutter an mindestens einem der gegenüberliegenden Enden aufzunehmen.

9. Isoliersystem nach Anspruch 7, wobei das axiale Verriegelungsmerkmal eine halbkreisförmige Ausnehmung umfasst, die in dem Haltering gebildet ist, und der axiale Verriegelungsüberstand einen komplementären halbkreisförmigen Vorsprung aufweist, der sich in die halbkreisförmige Ausnehmung erstreckt.

10. Isoliersystem nach Anspruch 7, wobei die innere Dichtungsfläche eine chevronförmige, druckaktivierte Oberfläche aufweist.

## Revendications

1. Appareil d'étanchéité (10, 50) pour une utilisation entre des pièces assemblées (12, 70) dans une conduite d'écoulement qui fonctionne pour contenir un fluide à l'intérieur, comprenant :
(A) une bague de retenue (54, 100, 200) comprenant un noyau métallique (62, 202) ayant des surfaces latérales opposées, dans lequel chacune des surfaces latérales opposées a un matériau diélectrique (66, 204(1), 204(2)) disposé dessus et une ouverture de diamètre intérieur formée à l'intérieur, la bague de retenue comprenant :
(i) un élément de verrouillage axial (55, 86, 214) formant une rainure circonférentielle (216) dans le matériau diélectrique sur l'ouverture de diamètre intérieur, et
(ii) un élément de verrouillage radial (55, 82, 214) formant un rebord circonférentiel (212) dans le noyau autour de l'ouverture de diamètre intérieur ; et
(B) un élément d'étanchéité de diamètre intérieur (58, 250) ayant une surface d'étanchéité intérieure (252), une surface d'étanchéité extérieure et une partie de verrouillage, la partie de verrouillage comprenant :
(i) une saillie de verrouillage axiale (55, 94, 264) interverrouillée avec l'élément de verrouillage axial, et
(ii) un crochet (55, 90, 206, 256) interverrouillé avec ledit élément de verrouillage radial,
dans lequel l'interverrouillage de la saillie de verrouillage axiale avec l'élément de verrouillage axial et du crochet avec l'élément de verrouillage radial empêche sensiblement le mouvement axial et radial relatif entre la bague de retenue et l'élément d'étanchéité de diamètre intérieur.

2. Appareil d'étanchéité selon la revendication 1, dans lequel l'élément d'étanchéité de diamètre intérieur a une première hauteur (Hₛ) et la bague de retenue a une deuxième hauteur (Hᵣ) inférieure à la première hauteur pour permettre la compression du joint de diamètre intérieur.

3. Appareil d'étanchéité selon la revendication 1, dans lequel ladite bague de retenue comprend en outre une rainure (104) formée sur chacune desdites surfaces latérales opposées et un deuxième élément d'étanchéité disposé dans chacune desdites rainures.

4. Appareil d'étanchéité selon la revendication 1, dans lequel la rainure circonférentielle de l'élément de verrouillage axial est une rainure rectangulaire formée dans la couche de matériau diélectrique sur un seul côté du noyau métallique et dans lequel la saillie de verrouillage axiale comprend une projection en forme de coin qui s'étend dans ladite rainure rectangulaire.

5. Appareil d'étanchéité selon la revendication 1, dans lequel le crochet comprend une jambe (258) et une lèvre (260) de sorte qu'un évidement (262) est formé entre elles, et l'évidement est dimensionné pour s'engager de manière coopérative avec le rebord circonférentiel.

6. Appareil d'étanchéité selon la revendication 1, dans lequel la surface d'étanchéité intérieure comprend une surface convergeant vers l'intérieur qui est activée par pression.

7. Système d'isolation qui fournit une interface entre des pièces de bride assemblées (12, 70), chacune ayant une face intérieure et une face extérieure, comprenant :
un appareil d'étanchéité selon l'une quelconque des revendications précédentes ;
au moins un manchon isolant (22) pouvant être reçu dans un alésage aligné (20) formé dans chaque pièce de bride assemblée, ledit manchon ayant une longueur qui est sensiblement égale à une distance entre les faces extérieures des pièces de bride assemblées avec ledit appareil d'étanchéité interposé entre elles ;
au moins une attache métallique allongée (18, 32) ayant des extrémités opposées, ladite attache pouvant être reçue dans ledit manchon isolant pour relier les pièces de bride assemblées l'une à l'autre avec ledit appareil d'étanchéité interposé entre elles ; et
au moins une rondelle isolante (26) pouvant être reçue sur ladite au moins une attache métallique allongée en butée sur au moins l'une des faces extérieures de la pièce de bride.

8. Système d'isolation selon la revendication 7, dans lequel ladite attache métallique comprend en outre au moins un écrou (32) et une tige métallique (18) filetée pour recevoir l'écrou sur au moins une desdites extrémités opposées.

9. Système d'isolation selon la revendication 7, dans lequel ladite caractéristique de verrouillage axiale comprend un évidement de forme semi-circulaire formé dans ladite bague de retenue, et ladite saillie de verrouillage axiale comprend une saillie complémentaire de forme semi-circulaire qui s'étend dans ledit évidement de forme semi-circulaire.

10. Système d'isolation selon la revendication 7, dans lequel ladite surface d'étanchéité intérieure comprend une surface activée par pression en forme de chevron.
